# EUROPÄISCHE PATENTSCHRIFT

(11) **EP 2 160 306 B1**
(45) Veröffentlichungstag und Bekanntmachung des Hinweises auf die Patenterteilung: **09.03.2011**
(21) Anmeldenummer: 08759162.4
(22) Anmeldetag: 11.06.2008
(51) Int. Cl.: B60R 22/46

(54) **GURTSTRAFFER MIT BECHERFÖRMIGEM ANTRIEBSKOLBEN**
BELT TENSIONER WITH A CUP-SHAPED DRIVE PISTON
RETRACTEUR DE CEINTURE AVEC PISTON D'ENTRAINEMENT EN FORME DE COUPE

(30) Priorität: 23.06.2007 DE 102007028980
(43) Veröffentlichungstag der Anmeldung: 10.03.2010
(73) Patentinhaber: Autoliv Development AB, 447 83 Vårgårda (SE)
(72) Erfinder: SUHR, Stefan, 25336 Elmshorn (DE); SCHMIDT, Martin, 25337 Elmshorn (DE); FREY, Erne, 25337 Elmshorn (DE)
(74) Vertreter: Müller, Karl-Ernst
(86) Internationale Anmeldenummer: PCT/EP2008/004644
(87) Internationale Veröffentlichungsnummer: WO 2009/000417

(56) Entgegenhaltungen:
- DE-A1- 2 931 164
- DE-A1- 19 602 549

## Beschreibung

Die Erfindung betrifft einen Gurtstraffer für Sicherheitsgurte insbesondere in Kraftfahrzeugen, mit einem im Auslösefall mit der Gurtwelle kuppelbaren Strafferantrieb, der aus einem von einem in seinem Inneren einen Kanal ausbildenden Rohrgehäuse über wenigstens einen Teil seines Umfangs umschlossenen Antriebsrad besteht, wobei zum Antrieb des Antriebsrades eine Mehrzahl von mittels eines pyrotechnischen Antriebs beschleunigten Massekugeln durch den Kanal hindurchleitbar ist und an dem mit dem eingeleiteten Gas zu beaufschlagenden Ende des Kanals ein nach Art eines hohlen Bechers ausgebildeter Antriebskolben für die Massekugeln angeordnet ist.

Ein Gurtstraffer mit den vorgenannten Merkmalen ist in der DE 29 31 164 A1 beschrieben. Soweit bei der bekannten Ausbildung der Antriebskolben nach Art eines hohlen Bechers ausgebildet ist, liegt der Becher mit seiner gerade ausgebildeten Stirnseite gegen die erste benachbarte Massekugel an. Mit seiner äußeren Wandung liegt der Becher gegen die Innenseite des den die Massekugel aufnehmenden Kanal ausbildenden Rohrgehäuses an. Mit der bekannten Ausbildung ist noch der Nachteil verbunden, dass vergleichsweise hohe Reibungskräfte beim Durchschieben des Antriebskolbens durch den Kanal auftreten können.

Ein vergleichbarer Gurtstraffer mit den vorgenannten Merkmalen ist in der DE 196 02 549 B4 beschrieben. Bei der bekannten Ausführung ist der Kolben als eine Zwillingskugel ausgebildet, bei welcher eine der die Zwillingskugel bildenden Massekugeln eine gegen die innere Wandung des den Kanal ausbildenden Rohrgehäuses anliegende Dichtung in Form eines in eine an der betreffenden Massekugel ausgebildete Nut eingelegten Dichtungsringes trägt. Mit der bekannten Kolbenausführung ist der Nachteil verbunden, dass die Fertigung des Antriebskolbens mit der Zwillingskugel, dem Einstechen der Nut in eine der Massekugeln und der Montage des Dichtungsringes entsprechend aufwendig ist; außerdem verursacht der aus Gründen der Dichtheit mit einer entsprechenden Vorspannung zwischen der Massekugel und der Wandung des Rohrgehäuses eingeklemmte Dichtungsring bei der Bewegung des Antriebskolbens durch den Kanal entsprechend hohe Reibungskräfte.

Der Erfindung liegt daher die Aufgabe zugrunde, bei einem Gurtstraffer mit den eingangs genannten, gattungsgemäßen Merkmalen die bei der Vorschubbewegung des Antriebskolbens durch das Rohrgehäuse auftretenden Reibungskräfte zu verringern.

Die Lösung dieser Aufgabe ergibt sich aus dem Anspruch 1; vorteilhafter Ausgestaltungen und Weiterbildungen der Erfindung sind in den Unteransprüchen angegeben.

Die Erfindung sieht in ihrem Grundgedanken vor, dass der Antriebskolben an seiner geschlossenen Stirnseite mit einer einwärts gerichteten, an die Kontur einer Massekugel angepassten Einwölbung versehen ist und der Antriebskolben an seinem der Stirnfläche gegenüberliegenden Ende mit einer linienförmigen Dichtkante gegen die Innenseite des den Kanal aufnehmenden Rohrgehäuses anliegt. Hiermit ist der Vorteil verbunden, dass einerseits die in der geschlossenen Stirnfläche des Antriebskolbens ausgebildete Einwölbung für eine gute Führung der in dem Kanal des Rohrgehäuses angeordneten Reihe von Massekugeln sorgt, sodass wenig Reibungsverluste auftreten; weiterhin werden durch die quasi ringförmige Anlage der hinteren Dichtkante die bei der Bewegung des Antriebskolbens durch das Rohrgehäuse auftretenden Reibungskräfte minimiert. Insgesamt geht somit mit der erfindungsgemäßen Ausgestaltung eine Erhöhung des Wirkungsgrades des Strafferantriebes einher.

Nach einem Ausführungsbeispiel der Erfindung ist vorgesehen, dass der becherförmige Antriebskolben eine sich in Richtung der Massekörper verjüngende konische Form aufweist; hiermit wird durch die gasdruckbedingte Aufweitungstendenz der konischen Kolbenform die Dichtheit des Antriebskolbens gegenüber dem Rohrgehäuse verbessert. Hierbei kann nach einem Ausführungsbeispiel der Erfindung vorgesehen sein, dass die konische Form des Antriebskolbens über dessen Längsachse wenigstens einmal abgestuft ist.

Im Einzelnen kann dabei vorgesehen sein, dass der Antriebskolben an seinem der Stirnfläche gegenüberliegenden Ende mit einer linienförmigen Dichtkante gegen die Innenseite des den Kanal aufnehmenden Rohrgehäuses anliegt.

Nach Ausführungsbeispielen der Erfindung kann vorgesehen sein, dass der Kolben aus Stahl besteht und dabei insbesondere als Stahltiefziehteil ausgebildet ist.

In der Zeichnung ist ein Ausführungsbeispiel der Erfindung wiedergegeben, welches nachstehend beschrieben ist. Es zeigen:
- Fig. 1: eine Gurtaufwickelwelle mit Strafferantrieb in einer räumlichen Darstellung,
- Fig. 2: eine Einzeldarstellung des Antriebskolbens in einer geschnittenen Seitenansicht.

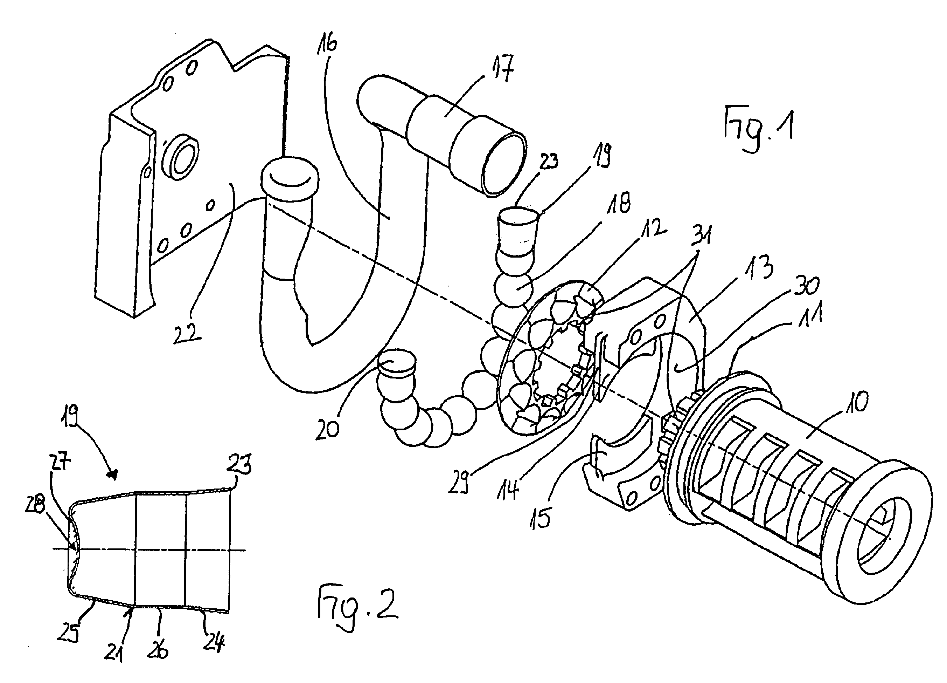

Wie im einzelnen nicht weiter dargestellt, ist eine Gurtaufwickelwelle 10 in einem in der Regel U-förmig und lastaufnehmend ausgebildeten Gurtaufrollergehäuse drehbar gelagert. Um die Gurtaufwickelwelle in eine das auf ihr aufgewickelte Gurtband strammende Drehung zu versetzen, ist ein pyrotechnisch beaufschlagter Antrieb vorgesehen, der aus einem aus den beiden Antriebsradhälften 11, 12 bestehenden Antriebsrad besteht, wobei die Antriebsradhälfte 11 bei dem dargestellten Ausführungsbeispiel fest mit der Gurtaufwickelwelle 10 verbunden ist. Wie sich aus Figur 1 ergibt, wird die zweite Antriebsradhälfte 12 beim Zusammenbau des Rotationsstraffers gegen die erste Antriebsradhälfte 11 gesetzt und über eine Verzahnung 31 mit dieser verbunden. Zwischen den beiden Antriebsradhälften 11, 12 ist ein dem Gehäuse des Gurtaufrollers zuzuordnender Schwertkasten 13 angeordnet, der inzwischen die beiden Antriebsradhälften 11, 12 reichende schwertförmige Führungen 14, 15 trägt und mit seinem Innenumfang 30 den Außenumfang des Antriebsrades 11, 12 umschließt.

In der Ebene des Schwertkastens 13 beziehungsweise des Antriebsrades 11, 12 ist ein gekrümmtes Rohrgehäuse 16 angeordnet, in dessen innerem Kanal die der Beschleunigung des Antriebsrades 11, 12 dienenden Massekugeln 18 bevorratet sind. An dem einen Ende des Rohrgehäuses 16 ist eine Gasgeneratoraufnahme 17 angeordnet, in welcher ein im einzelnen nicht dargestellter Gasgenerator untergebracht ist, dessen im Auslösefall freiwerdendes Gas die Massekugeln 18 aus dem Rohrgehäuse 16 heraus treibt. Hierzu ist in dem Rohrgehäuse 16 der Gasgeneratoraufnahme 17 zugeordnet ein Antriebskolben 19 angeordnet, während auf der gegenüberliegenden Seite ein Rohrverschluss 20 liegt. Außen auf dem Rohrgehäuse 16 sitzt eine Abdeckkappe 22, die mit dem nicht dargestellten zugeordneten U-Schenkel des Gurtaufrollergehäuses verbunden wird und dabei auch das Rohrgehäuse 16 und den Schwertkasten 13 trägt und haltert.

Wie sich im einzelnen aus Figur 2 ergibt, ist der in Figur 1 angedeutete Antriebskolben 19 nach Art eines hohlen Bechers mit einer zur Anordnung der Massekugeln 18 in dem Kanal des Rohrgehäuses 16 hinweisenden Stirnfläche 27 ausgebildet. Der Antriebskolben 19 weist insgesamt eine gestufte konische Form auf, indem sich an ein zentrales zylindrisches Mittelteil 26 nach vorne eine sich zur vorderen Stirnfläche 27 hin konisch verjüngende Stufe 25 und dazu gegenüberliegend nach hinten eine sich konisch erweiternde Stufe 24 angeschlossen ist. Am hinteren Ende der konischen Stufe 24 ist eine Dichtkante 23 ausgebildet, die mit einer linienförmigen Anlage gegen die Innenseite des den Kanal aufnehmenden Rohrgehäuses 16 anliegt und für die Abdichtung des Antriebskolbens 19 gegen das Rohrgehäuse 16 sorgt. Die vordere Stirnfläche 25 ist mit einer Einwölbung 28 versehen, die an die Kontur einer Massekugel 18 angepasst ist, so dass sich bei der Vorwärtsbewegung des Antriebskolbens 19 durch das Rohrgehäuse 16 eine formschlüssige Führung des Endes der Kette von Massekugeln ergibt.

Bei Auslösung des Gasgenerators tritt das freigesetzte Gas zunächst in das durch den hohlen Antriebskolben 19 gebildete Vorvolumen ein und treibt nach entsprechendem Druckaufbau einerseits den Antriebskolben 19 in dem Rohrgehäuse 16 voran, wobei gleichzeitig andererseits durch den Gasdruck die hintere Dichtkante 23 des Antriebskolbens 19 verstärkt gegen die Innenfläche den Kanal ausbildenden Rohrgehäuses 16 gepresst wird, so dass sich hier eine gute Abdichtung zwischen Antriebskolben 19 und Rohrgehäuse 16 ergibt. Aufgrund der quasi ringförmigen Anlage der Dichtkante 23 sind Reibungskräfte bei der Vorwärtsbewegung des Antriebskolbens 19 verringert.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Gurtstraffer für Sicherheitsgurte insbesondere in Kraftfahrzeugen, mit einem im Auslösefall mit der Gurtwelle (10) kuppelbaren Strafferantrieb, der aus einem von einem in seinem Inneren einen Kanal ausbildenden Rohrgehäuse (16) über wenigstens einen Teil seines Umfangs umschlossenen Antriebsrad (11, 12) besteht, wobei zum Antrieb des Antriebsrades (11, 12) eine Mehrzahl von mittels eines pyrotechnischen Antriebs beschleunigten Massekugeln (18) durch den Kanal hindurchleitbar ist und an dem mit dem eingeleiteten Gas zu beaufschlagenden Ende des Kanals ein nach Art eines hohlen Bechers ausgebildeter Antriebskolben (19) für die Massekugeln (18) angeordnet ist, **dadurch gekennzeichnet, dass** der Antriebskolben (19) an seiner geschlossenen Stirnseite (27) mit einer einwärts gerichteten, an die Kontur einer Massekugel (18) angepassten Einwölbung (28) versehen ist und der Antriebskolben (19) an seinem der Stirnfläche (27) gegenüberliegenden Ende mit einer linienförmigen Dichtkante (23) gegen die Innenseite des den Kanal aufnehmenden Rohrgehäuses (16) anliegt.

2. Gurtstraffer nach Anspruch 1, **dadurch gekennzeichnet, dass** der becherförmige Antriebskolben (19) eine sich in Richtung der Massekörper (18) verjüngende konische Form aufweist.

3. Gurtstraffer nach Anspruch 2, **dadurch gekennzeichnet, dass** die konische Form des Antriebskolbens (19) über dessen Längsachse wenigstens einmal abgestuft ist.

4. Gurtstraffer nach einem der Ansprüche 1 bis 3, **dadurch gekennzeichnet, dass** der Antriebskolben (19) aus Stahl besteht.

5. Gurtstraffer nach einem der Ansprüche 1 bis 4, **dadurch gekennzeichnet, dass** der Antriebskolben (19) als Tiefziehteil ausgebildet ist.

## Claims

1. A belt tightener for safety belts, in particular in motor vehicles, with a tightener drive which, in the event it is triggered, can be coupled to the belt shaft (10), and includes a drive wheel (11, 12) which is enclosed over at least part of its periphery by a tubular housing (16) which forms a channel in its interior, wherein, in order to drive the drive wheel (11, 12), a plurality of solid balls (18), which are accelerated by means of a pyrotechnic drive, can be guided through the channel, and a drive piston (19) for the solid balls (18), which is designed in the manner of a hollow cap, is arranged at that end of the channel which is to be acted upon by the gas introduced, **characterized in that** the drive piston (19) on its closed end side (27) is provided with an inwardly directed curvature (28) adapted to the contour of a solid ball (18) and that at its end opposite the end face (27) the drive piston (19) presses against the inner surface of the tubular housing (16) that accommodates the channel with a linear sealing rim (23).

2. The belt tightener according to claim 1, **characterized in that** the cup-shaped drive piston (19) has a conical shape tapering in the direction of the solid balls (18).

3. The belt tightener according to claim 2, **characterized in that** the conical shape of the drive piston (19) is graduated at least once along its longitudinal axis.

4. A belt tightener according to any one of claims 1 to 3, **characterized in that** the drive piston (19) consists of steel.

5. A belt tightener according to any one of claims 1 to 4, **characterized in that** the drive piston (19) is configured as a deep-drawn steel part.

## Revendications

1. Rétracteur de ceinture pour ceintures de sécurité, notamment dans des véhicules automobiles, avec un entraînement de rétracteur pouvant être accouplé à l'arbre de ceinture (10) en cas de déclenchement, lequel se compose d'une roue d'entraînement (11,12) entourée par un boîtier tubulaire (16) formant à l'intérieur un canal sur au moins une partie de sa périphérie, une pluralité de billes de masse (18) accélérées au moyen d'un entraînement pyrotechnique pouvant être guidées à travers le canal pour entraîner la roue d'entraînement (11,12), et un piston d'entraînement (19) réalisé à la manière d'une coupe creuse pour les billes de masse(18) étant disposé à l'extrémité du canal devant être sollicitée par le gaz introduit, **caractérisé en ce que** le piston d'entraînement (19) est muni sur son côté frontal fermé (27) d'une partie courbée (28) orientée vers l'intérieur et adaptée au contour d'une bille de masse (18) et **en ce que** le piston d'entraînement (19) repose, au niveau de son extrémité située en vis-à-vis de la surface frontale (27), avec une arête d'étanchéité en forme de ligne (23) contre le côté intérieur du boîtier tubulaire (16) hébergeant le canal.

2. Rétracteur de ceinture selon la revendication 1, **caractérisé en ce que** le piston d'entraînement en forme de coupe (19) présente une forme conique s'amenuisant en direction des corps de masse (18).

3. Rétracteur de ceinture selon la revendication 2, **caractérisé en ce que** la forme conique du piston d'entraînement (19) est au moins une fois étagée sur son axe longitudinal.

4. Rétracteur de ceinture selon l'une des revendications 1 à 3, **caractérisé en ce que** le piston d'entraînement (19) se compose d'acier.

5. Rétracteur de ceinture selon l'une des revendications 1 à 4, **caractérisé en ce que** le piston d'entraînement (19) est réalisé en tant que pièce emboutie.
